# EUROPEAN PATENT APPLICATION

(11) **EP 4 609 765 A1**
(43) Date of publication of application: **03.09.2025**
(21) Application number: 22963060.3
(22) Date of filing: 26.10.2022
(51) Int. Cl.: A47J 37/06

(54) **AIR FRYER AND COOKING DEVICE FOR FOOD PREPARATION**

(71) Applicant: Shenzhen Typhur Technology Co., Ltd, Shenzhen, Guangdong 518067 (CN)
(72) Inventor: LI, Haopeng, Shenzhen, Guangdong 518067 (CN); LI, Chengmin, Shenzhen, Guangdong 518067 (CN)
(74) Representative: KIPA AB
(86) International application number: PCT/CN2022/127798
(87) International publication number: WO 2024/087076

(57) **Abstract**

An air fryer and cooking apparatus (1) for cooking food. A top wall (122) of a heating chamber (120) of the air fryer comprises a first top wall (1221) and second top walls (1222) arranged around the first top wall (1221), the second top walls (1222) are obliquely arranged downwards relative to the first top wall (1221), and lower ends of the second top walls (1222) extend to below a heating assembly (130) in order to guide hot air to flow to a circumferential side of a basket (210) along the second top walls (1222) and flow from the circumferential side of the basket (210) to the middle of the basket (210), such that food ingredients on each layer can all be heated more evenly. Moreover, the second top walls (1222) inclining downwards serve as both cavity walls of the heating cavity (120) and flow guide structures, such that there is no need to additionally provide flow guide structures above the basket (210), and therefore the size of a main unit (100) in a vertical direction can be reduced, thereby facilitating the flatter design of the main unit (100).

## Description

### Technical Field

The present invention relates to kitchen cooking appliances, and more particularly to a cooking device for food preparation.

### Background Art

Cooking devices such as air fryers and compact air ovens use heating elements to heat air and employ circulating high-temperature air to cook food, thereby achieving a frying-like effect without the need for oil.

Typically, such cooking devices include a frying container for containing food. When the container, along with the food, is inserted into the heating chamber of the main unit, the hot air generated in the chamber cooks the food. However, in existing air fryers, the container is usually deep. When there is a large quantity of food, the food is stacked, circulating hot air often cannot reach all layers of the stacked food evenly, resulting in uneven heating and inconsistent doneness across layers, thereby compromising taste.

### Summary of the Invention

The present invention is to provide an air fryer and a cooking device for food preparation, which allow food to be heated more uniformly.

To achieve the above objective, an embodiment of the present invention provides an air fryer for food preparation, comprising:
A main unit, comprising a heating chamber, a heating assembly, and a control unit; the heating chamber having an opening; the control unit is electrically connected to the heating assembly for controlling the heating assembly; and
A food container, the food container comprising a container body for accommodating food, the container body is insertable into and removable from the heating chamber via the opening; the heating assembly is configured to generate hot air within the container body;
The ratio *a* of the horizontal dimension to the vertical dimension of the container cavity is: 5 ≤ *a* ≤ 6.

In one embodiment, the top wall of the heating chamber includes a first top wall and a second top wall surrounding the first top wall, the second top wall is inclined downward relative to the first top wall so as to guide hot air along the second top wall to flow toward the peripheral side of the container body.

To achieve the above objective, an embodiment of the present application provides a cooking device for food preparation, comprising:
A main unit, the main unit comprising a heating chamber, a heating assembly, and a control unit; the heating chamber having an opening; the control unit is electrically connected to the heating assembly to control the heating assembly; and
A food container, the food container includes a container body configured to hold food, the container body is insertable into and removable from the heating chamber through the opening; the heating assembly is configured to generate hot air within the container body.

The top wall of the heating chamber includes a first top wall and a second top wall defined surrounding the first top wall, the second top wall is inclined downward relative to the first top wall, and a lower end of the second top wall extends below the heating assembly, so as to guide hot air to flow along the second top wall toward the peripheral side of the container body.

In one embodiment, an angle *b* formed between the second top wall and the first top wall is in the range of 105° ≤ *b* ≤ 150°.

In one embodiment, when the container body is placed into the heating chamber, the lower end of the second top wall extends to a vertical alignment with a peripheral side wall of the container body or extends to a position in a horizontal plane inside the peripheral side wall.

In one embodiment, when the container body is inserted into the heating chamber, the portion of the food container inserted into the heating chamber is substantially flush in the horizontal direction with the lower end of the second top wall.

In one embodiment, the heating assembly includes a heating element and a first fluid driving component. When the container body is placed in the heating chamber, a first zone is formed between the upper end of the container body and the top wall of the heating chamber. The heating element is defined in the first zone, and at least a portion of the heating element is located in an air intake region of the first fluid driving component, so that airflow may pass through the heating element and then enter the first fluid driving component. The first fluid driving component exhausts air radially, and the airflow is exhausted radially from the first fluid driving component.

In one embodiment, the upper end of the container body is open, the heating element is defined above the opening, and the first fluid driving component is defined above the heating element. When the container body is placed in the heating chamber, a ratio c between the distance from the bottom wall of the container body to the heating element and the vertical dimension of the heating chamber is: 0.5 ≤ *c* ≤ 0.58.

In one embodiment, the heating element has a disc-shaped structure, and an outer diameter *d* of the disc-shaped structure is in the range of 190 mm ≤ *d* ≤ 220 mm.

In one embodiment, a ratio *d* between the horizontal dimension and the vertical dimension of the heating chamber is: 2 ≤ *d* ≤ 3.

In one embodiment, a ratio e between the vertical dimension of the container body and the vertical dimension of the heating chamber is: 0.4 ≤ *e* ≤ 0.5.

In one embodiment, a ratio *f* between the vertical length of the main unit and its orthogonal projection area on the horizontal plane is: 0.0005 ≤ *f* ≤ 0.0030.

In one embodiment, the main unit comprises a housing, within which the heating chamber and the heating element of the heating assembly are defined. The housing includes a convex-shaped outer top wall.

In one embodiment, the lowest end of the outer top wall is positioned below the first top wall of the heating chamber.

In one embodiment, in a top-down direction, the horizontal distance from the outer top wall to its central axis gradually increases.

In one embodiment, in a vertical cross-section of the outer top wall, the outer wall of the outer top wall is a curve with continuous curvature.

In one embodiment, the curvature g of the curved outer wall is ≤ 0.01.

In one embodiment, the main unit comprises a through-type cooling channel, at least a portion of the cooling channel is located above the heating chamber, and the control unit is arranged within the cooling channel.

In one embodiment, the main unit includes a hot air shield and a cooling cover, the hot air shield is fixed within the housing and cooperates with a base of the housing to define the heating chamber; the cooling cover is defined within the housing and located above the hot air shield, a gap being formed between the hot air shield and the cooling cover, the gap forming at least a portion of the cooling channel.

In one embodiment, the main unit further comprises a flow guide cover and a second fluid driving component. The cooling cover has a ventilation port at its central portion, and the flow guide cover is fitted over the cooling cover and in communication with the ventilation port. The second fluid driving component is defined within the flow guide cover, and the control unit is located within the air outlet region of the second fluid driving component.

In one embodiment, the second fluid driving component performs radial air exhaust, and the control unit is defined on the peripheral side of the second fluid driving component and located above the heating chamber.

In one embodiment, the main unit includes a thermal insulation shield defined within the housing and located above the hot air shield. A thermal insulation material is arranged between the thermal insulation shield and the hot air shield.

In one embodiment, in a vertical direction, with the top wall of the heating chamber as a reference, a ratio *h* between the vertical dimension of the portion of the main unit located above the top wall and the vertical dimension of the heating chamber is: *h* ≥ 0.48.

In one embodiment, in a vertical direction, using the top edge of the opening as a reference, a ratio i between the vertical dimension of the portion of the main unit located above the top edge and the portion located below the top edge is: *i* > 1.

To achieve the above objective, an embodiment of the present application provides a cooking device for food preparation, comprising:
a main unit, the main unit having a heating chamber, a heating assembly, and a control unit, the heating chamber being provided with an opening, the control unit being electrically connected to the heating assembly to control the heating assembly; and
a food container, the food container comprising a container body for accommodating food, the container body being insertable into and removable from the heating chamber via the opening, the heating assembly is configured to generate hot air within the container body;
a ratio *a* of the horizontal dimension to the vertical dimension of the container cavity is: 5 ≤ *a* ≤ 6.

To achieve the above objective, another embodiment of the present application provides a cooking device for food preparation, comprising:
a main unit, the main unit having a heating chamber, a heating assembly, and a control unit, the heating chamber being provided with an opening, the control unit being electrically connected to the heating assembly to control the heating assembly; and
a food container, the food container comprising a container body for accommodating food, the container body being insertable into and removable from the heating chamber via the opening, the heating assembly is configured to generate hot air within the container body;
a top wall of the heating chamber includes a first top wall and a second top wall defined surrounding the first top wall, the second top wall being inclined downward relative to the first top wall, and a lower end of the second top wall extending below the heating assembly so as to guide the hot air to flow along the second top wall toward the peripheral side of the container body.

According to one embodiment of the above-described air fryer and cooking device, the main unit includes a heating chamber, and the container body is insertable into and removable from the heating chamber through the opening. The ratio *a* between the horizontal dimension and vertical dimension of the container body is 5 ≤ *a* ≤ 6. This ratio ensures that the container body has a more flattened structure, thereby reducing the number of stacked food layers within the container and improving the uniformity of heating across different layers.

According to another embodiment of the above-described air fryer and cooking device, the main unit includes a heating chamber, and the container body is insertable into and removable from the heating chamber through the opening. The top wall of the heating chamber comprises a first top wall and a second top wall surrounding the first top wall. The second top wall is inclined downward relative to the first top wall, and its lower end extends below the heating assembly to guide hot air along the second top wall toward the peripheral sides of the container body and from there inward toward the center of the container. As a result, food at all levels can be heated more evenly. Moreover, the downward-inclined second top wall serves both as a chamber wall and an air guide structure, which reduces the vertical dimension of the main unit and facilitates a flatter overall design.

### Brief Description of the Drawings

FIG. 1 is a schematic view of the external structure of a cooking device according to one embodiment of the present application, in which the food container is inserted into the main unit.
FIG. 2 is a schematic view of the external structure of the cooking device according to one embodiment of the present application, in which the food container is removed from the main unit.
FIG. 3 is a vertical cross-sectional view of the cooking device according to one embodiment of the present application.
FIG. 4 is an enlarged view of portion A in FIG. 3.
FIG. 5 is an exploded view of part of the structure of the cooking device according to one embodiment of the present application.
FIG. 6 is an exploded view of part of the main unit according to one embodiment of the present application.
FIG. 7 is a schematic vertical sectional view of the container body according to one embodiment of the present application.
FIG. 8 is a schematic vertical sectional view showing the top wall of the heating chamber and the container body according to one embodiment of the present application.
FIG. 9 is a schematic vertical sectional view showing the top wall of the heating chamber and the container body according to another embodiment of the present application.
FIG. 10 is another schematic vertical sectional view of the top wall of the heating chamber and the container body according to a further embodiment of the present application.
FIG. 11 is a schematic view showing the external proportions of the cooking device according to one embodiment of the present application.
FIG. 12 is a schematic view of the control unit according to one embodiment of the present application.

### Detailed Description of the Embodiments

The present invention will now be described in further detail with reference to the accompanying drawings and specific embodiments. In the various embodiments, similar elements are denoted by like reference numerals. Many specific details are included in the following embodiments to facilitate a better understanding of the present application. However, those skilled in the art will readily appreciate that certain features may be omitted or replaced with alternative components, materials, or methods depending on different application scenarios.

In some cases, certain operations related to this application are not explicitly illustrated or described in the specification to avoid obscuring the core aspects of the present application. For those skilled in the art, these operations are not essential to be described in detail and can be readily understood and implemented based on the overall disclosure and general technical knowledge in the field.

Furthermore, the characteristics, operations, or features described in the specification may be combined in any suitable manner to form various embodiments. Also, the steps or actions in a method description may be rearranged or adjusted in sequence as would be apparent to those skilled in the art. Therefore, the ordering of elements and steps in the specification and drawings is provided merely for clarity of a particular embodiment and does not imply any mandatory sequence, unless explicitly stated as such.

The ordinal numbers used herein, such as "first," "second," etc., are solely for the purpose of distinguishing between similar elements and do not imply any order or technical significance. The terms "connected" or "coupled," unless otherwise specified, include both direct and indirect connections or couplings.

The present application provides a cooking device for food preparation, which is capable of performing air frying or roasting functions and includes, for example, an air fryer or an air oven. In some embodiments, the cooking device is an air fryer. The device heats and dehydrates food through hot air circulation, thereby achieving a texture similar to that of deep-fried food. The following description takes the air fryer as an illustrative example; however, it should be understood that the structures described in the embodiments below are also applicable to other cooking appliances with air frying functions, such as air ovens.

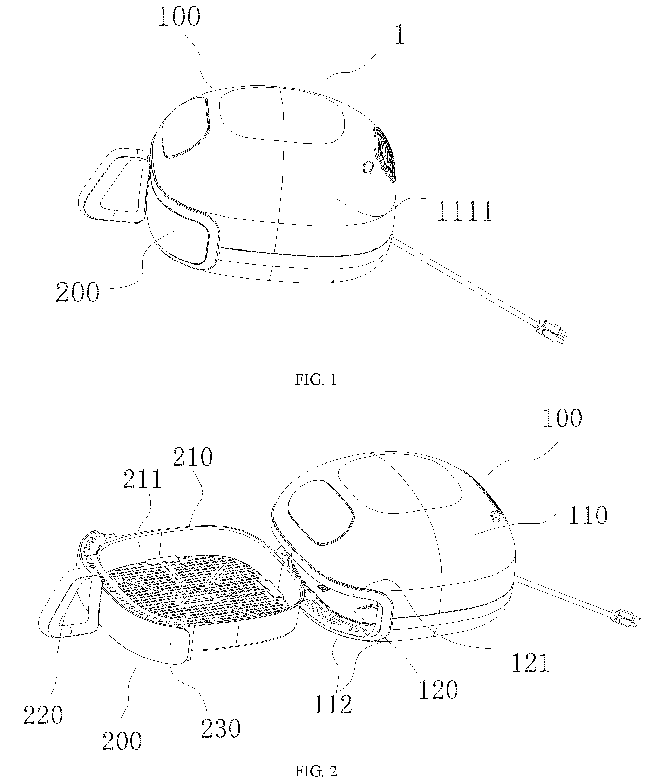

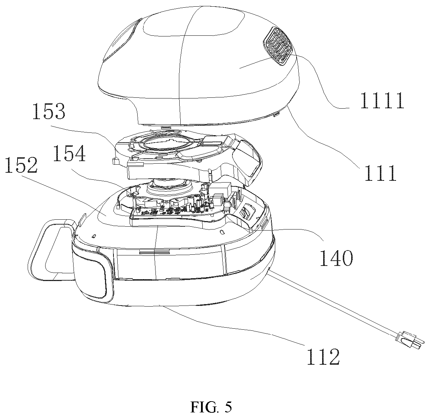

Referring to FIGS. 1 to 6, in some embodiments, the cooking device 1 comprises a main unit 100 and a food container 200.

The main unit 100 includes a housing 110, a heating chamber 120, a heating assembly 130, and a control unit 140. The heating chamber 120, heating assembly 130, and control unit 140 are defined within the housing 110. The heating chamber 120 has an opening 121, which is configured to allow insertion and removal of the food container 200. The heating chamber 120 defines a cavity enclosed by various components within the main unit 100. The heating assembly 130 is configured to heat the air within the heating chamber 120, thereby raising its internal temperature and cooking and dehydrating the food via hot air circulation. The heating assembly 130 may be defined inside the heating chamber 120 or in another location, as long as it is capable of generating hot air within the heating chamber 120. The control unit 140 is electrically connected to the heating assembly 130 and is used to control its operation. The control unit 140 may comprise one or more circuit boards with control circuitry.

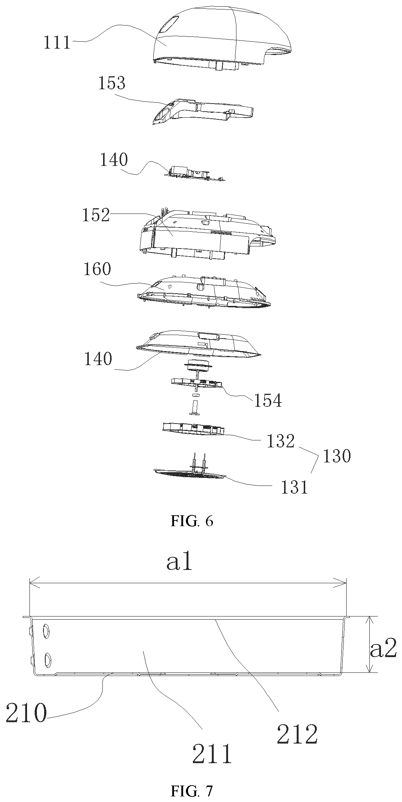

The food container 200 includes a container body 210 configured to hold food. The container body 210 is insertable into and removable from the heating chamber 120 through the opening 121. Referring to FIGS. 2 and 7, the container body 210 defines an internal container cavity 211, which has an opening 212 at its upper end. When the food container 200 is placed into the main unit 100, hot air generated by the heating assembly 130 flows into the container cavity 211 through the opening 212 and acts upon the food inside for cooking.

Referring to FIG. 2, in some embodiments, the food container 200 further includes a handle 220 and a connecting portion 230. The handle 220 is fixedly connected to the container body 210 via the connecting portion 230, allowing a user to grip and carry the entire food container 200 with ease.

Referring again to FIG. 7, to achieve a more flattened container body 210, in some embodiments, a ratio *a* of the horizontal dimension a1 to the vertical dimension a2 of the container cavity 211 is:5 ≤ a ≤ 6.

In some embodiments, the ratio is more narrowly defined as 5 ≤ a ≤ 5.8, for example a = 5.5. Here, the horizontal dimension *a1* refers to the maximum width of the container cavity 211, while the vertical dimension *a2* refers to the maximum height. A container cavity 211 with such a ratio *a* provides a more flattened profile, which reduces the number of stacked food layers. Fewer layers allow hot air to reach the lower layers more effectively, enhancing the uniformity of heating and promoting consistent texture and doneness across all layers.

Furthermore, a flatter container body 210 occupies less vertical space, thereby reducing the vertical size of the main unit 100. This allows for a more compact and space-efficient design, especially in environments where vertical clearance is limited.

On the other hand, to address the issue of uneven heating caused by excessive food stacking in the container body 210, alternative embodiments of the present application provide another design approach, as will be described below.

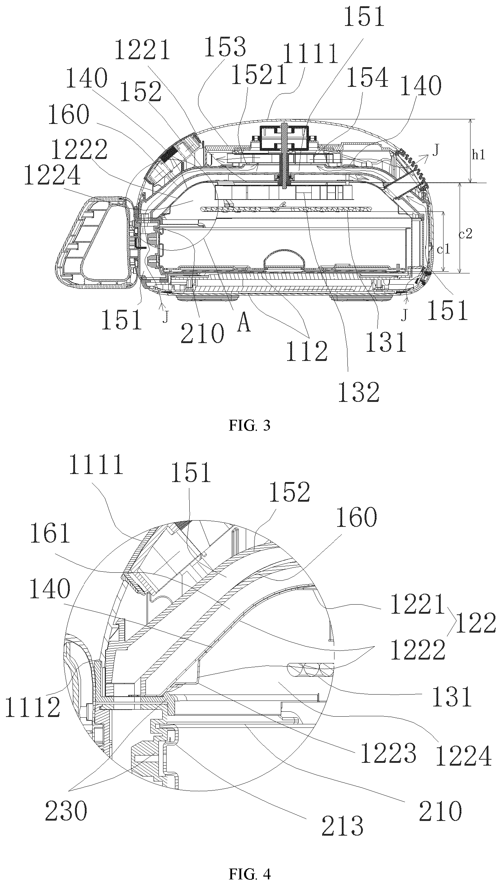

Referring to FIGS. 3, 4, and 8-10, in some embodiments, the top wall 122 of the heating chamber 120 includes a first top wall 1221 and a second top wall 1222 defined around the first top wall 1221. The second top wall 1222 is inclined downward relative to the first top wall 1221, and the lower end of the second top wall 1222 extends below the heating assembly 130, so as to guide hot air to flow along the second top wall 1222 toward the peripheral side of the container body 210.

The downward inclination means that the second top wall 1222 extends obliquely downward and outward from the perimeter of the first top wall 1221. This design enables the hot air to flow downward along the inner surface of the second top wall 1222 toward the side of the container cavity 211, then flow into the bottom of the container cavity 211 from its sides, inward toward the center, and finally upward through the middle, thereby achieving uniform heating for all layers of food.

Additionally, the downward-inclined second top wall 1222 functions as both a structural wall of the heating chamber 120 and an air guiding element, which helps reduce the vertical size of the main unit 100 and allows for a more compact, flattened design, thereby freeing up more vertical space.

Referring to FIGS. 3, 4, and 8, in some embodiments, the second top wall 1222 may have an annular convex surface, with a generally arcuate shape in vertical cross-section. For example, the cross-section of the second top wall 1222 may include at least a portion having a curve with continuous curvature. This arched structure facilitates the smooth flow of hot air along the inner surface of the second top wall 1222, minimizing turbulence and promoting more efficient lateral airflow toward the container body 210.

In some embodiments, the convex direction of the second top wall 1222 is away from the container cavity 211.

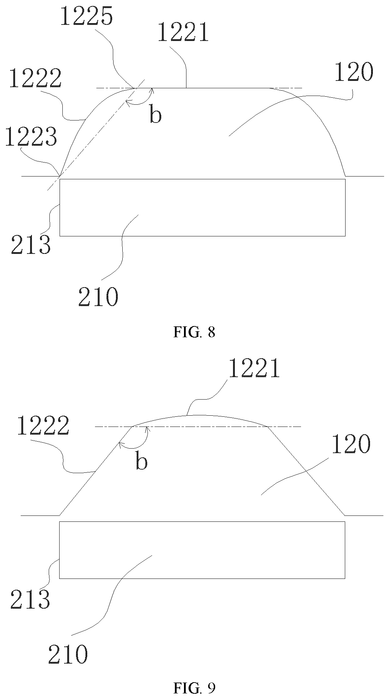

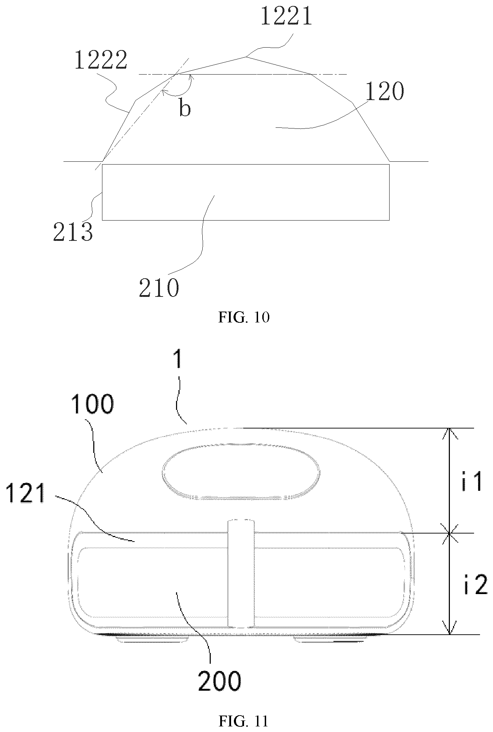

Of course, in other embodiments, the second top wall 1222 may take different forms. Referring to FIG. 9, in some embodiments, the second top wall 1222 may have a straight-line profile in vertical cross-section, forming an inverted conical ring shape with a larger lower diameter. Referring to FIG. 10, in some embodiments, the second top wall 1222 may have a polygonal or segmented broken-line profile, resulting in an inverted polygonal ring structure that is narrower at the top and wider at the bottom. Other inclined configurations for the second top wall 1222 are also possible, provided they achieve the desired guiding function for airflow.

To further enhance the airflow guidance toward the sides of the container cavity 211, in some embodiments (see FIGS. 8-10), the included angle b between the second top wall 1222 and the first top wall 1221 is within the range of 105° ≤ b ≤ 150°. The angle b is defined, in vertical cross-section, as the angle between a line connecting the upper and lower ends (1225, 1223) of the second top wall 1222 and a horizontal line passing through any point on the first top wall 1221. This angle b not only supports smooth airflow toward the sides of the container body 210 but also helps minimize vertical space, contributing to a low-profile design of the entire device.

Referring to FIGS. 3 and 8, in some embodiments, the first top wall 1221 is substantially flat and parallel to the horizontal plane. This configuration allows the first top wall 1221 to occupy minimal vertical space and avoids increasing the overall height of the heating chamber 120 due to any convex deformation. Furthermore, a planar first top wall 1221 promotes airflow distribution toward the surrounding second top wall 1222, facilitating even heat circulation.

Referring to FIG. 9, in other embodiments, the first top wall 1221 may also have a convex shape, with a curved profile in vertical cross-section. Referring to FIG. 10, in still other embodiments, the first top wall 1221 may have a faceted shape, with a vertical cross-section comprising two or more angled line segments.

In yet other embodiments, the shapes of the first top wall 1221 and the second top wall 1222 as shown in FIGS. 8, 9, and 10 may be interchangeably combined, i.e., the curved or faceted form of the first top wall 1221 may be paired with any corresponding shape of the second top wall 1222, and vice versa. Additionally, the first top wall 1221 may be formed in other suitable configurations not specifically illustrated herein, so long as the intended functional effect of the first top wall 1221 is achieved.

Further, to facilitate the entry of hot air from the peripheral side into the container cavity 211, some embodiments (see FIG. 4) provide that, when the container body 210 is inserted into the heating chamber 120, the lower end of the second top wall 1222 extends inward, such that it is located horizontally within the inner side of the peripheral wall 213 of the container body 210. Alternatively, as shown in FIGS. 8-10, the lower end of the second top wall 1222 may also extend to be vertically aligned with the peripheral wall 213 of the container body 210.

This configuration ensures that hot air can more easily flow along the lower edge of the second top wall 1222 and enter the container cavity 211 from the sides. Of course, in other embodiments, the lower end of the second top wall 1222 may extend beyond the outer side of the container's peripheral wall 213. In such cases, the hot air that flows around the outer side of the container body 210 may be redirected into the container by other structural components or used for other purposes.

Furthermore, referring to FIGS. 4 and 8-10, in some embodiments, when the container body 210 is placed inside the heating chamber 120, the portion of the food container 200 inserted into the heating chamber 120 is substantially flush in the horizontal direction with the lower end of the second top wall 1222. This design minimizes the leakage of hot air. Due to assembly tolerances, manufacturing deviations, and the need for insertion and removal of the food container 200, it may not be possible to achieve a completely sealed fit. As such, "substantially flush" here refers to either close contact or the presence of minor gaps that do not allow significant hot air leakage beyond the fryer body.

The portion of the food container 200 inserted into the heating chamber 120 may include both the container body 210 and the connecting portion 230, or just the container body 210 itself.

The embodiments above illustrate two exemplary solutions for improving the uniform heating of stacked food. These two solutions may be combined in some embodiments or used independently in others.

Additionally, referring to FIGS. 3 and 4, in some embodiments, when the container body 210 is placed inside the heating chamber 120, a first zone 1224 is formed between the upper end of the container body 210 and the top wall 122 of the heating chamber 120.

The heating assembly 130 includes a heating element 131 and a first fluid driving component 132. The heating element 131 may take any suitable form for heating air, such as resistance wires, heating tubes, or similar components. The first fluid driving component 132 may also take various forms, such as fans, that are capable of generating airflow.

The heating element 131 and the first fluid driving component 132 are defined within the first zone 1224. The heating element 131 is at least partially located within the inlet region of the first fluid driving component 132. The inlet region refers to the area adjacent to the air intake end of the first fluid driving component 132. The first fluid driving component 132 is configured to draw air from this region into its interior and then expel the air through its air outlet.

Because the heating element 131 is positioned within the air inlet region, the airflow passes through the heating element 131, forming hot air, which is then directed into the first fluid driving component 132. The component accelerates this hot air, resulting in a faster and more directed airflow.

Referring to FIGS. 3 and 6, in some embodiments, the first fluid driving component 132 performs radial air exhaust. For example, it may be implemented as a centrifugal fan, which expels airflow radially from its center. This radial configuration eliminates the need for a vertical air outlet above or below the fan, thereby conserving vertical space in the heating chamber 120. Of course, in other embodiments, the first fluid driving component 132 may alternatively be an axial fan or other suitable airflow generator.

Naturally, the heating assembly 130 may also be arranged in other configurations. For instance, the heating element 131 and the first fluid driving component 132 may be located in a separate chamber, different from the heating chamber 120, but in fluid communication with it. In such embodiments, the hot air expelled from the first fluid driving component 132 can flow into the heating chamber 120 to heat the food.

Referring to FIG. 3, in some embodiments, the heating element 131 is defined above the opening 212 of the container cavity 211, and the first fluid driving component 132 is defined above the heating element 131. In cases where the first fluid driving component 132 is a centrifugal fan, its rotational axis is vertically oriented, with its air inlet located at the bottom. The heating element 131 may thus be positioned directly beneath the fan's intake region.

Also referring to FIG. 3, in some embodiments, when the container body 210 is placed in the heating chamber 120, the distance c1 between the bottom wall of the container body 210 and the heating element 131, relative to the vertical dimension c2 of the heating chamber 120, defines a ratio *c*, where:0.5 ≤ c ≤ 0.58. For example, in one embodiment, c = 0.55.

Furthermore, in some embodiments, when the container body 210 is designed to be flatter, the horizontal-to-vertical dimension ratio d of the heating chamber 120 is: 2 ≤ d ≤ 3, thereby creating a flattened heating chamber suitable for housing a low-profile container body 210.

With such a flattened design, the horizontal dimension of the heating element 131 can be made larger. In some embodiments, the heating element 131 has a disc-shaped structure, with an outer diameter *d* of 190 mm to 220 mm. For example, in one embodiment, d = 208 mm.

In some embodiments, a ratio e between the vertical dimension a2 of the container body 210 and the vertical dimension c2 of the heating chamber 120 is: 0.4 ≤ e ≤ 0.5.

This ensures that sufficient space remains in the first zone 1224, even after the container body 210 is placed inside the heating chamber 120, allowing hot air to circulate and enter the container cavity 211 effectively. For example, in some embodiments, e = 0.43 or e = 0.48.

Furthermore, in some embodiments, the main unit 100 has a ratio *f* of its vertical length to its horizontal projected area (on a horizontal plane) within the range of: 0.0005 ≤ f ≤ 0.0030, where the vertical length is measured in millimeters (mm), and the horizontal projected area is measured in square millimeters (mm²).

In one example embodiment, f = 0.0018. For instance, the height of the main unit 100 may be between 200 mm and 300 mm, such as 246 mm, and the projected area on the horizontal plane may range from 120,000 mm² to 150,000 mm², such as 137,077 mm².

Further referring to FIGS. 3 and 4, in some embodiments, a ratio *h* is defined as the vertical dimension h₁ of the portion of the main unit 100 located above the top wall 122 of the heating chamber 120, to the vertical dimension c₂ of the heating chamber 120 itself, where: h ≥ 0.48.

Additionally, as shown in FIG. 10, in some embodiments, a ratio *i* is defined based on the top edge of the opening 121. The ratio *i* is the vertical dimension i₁ of the portion of the main unit 100 above the top edge of the opening 121, to the vertical dimension i₂ of the portion below it, where: i > 1.

Referring to FIGS. 3-6, in some embodiments, the housing 110 comprises an upper housing 111 and a base 112, together forming an installation cavity. The aforementioned components-including the heating chamber 120, heating assembly 130, and control unit 140-are all installed within this cavity. When the container body 210 is designed to be more flattened, the overall height of the housing 110 can be further reduced accordingly.

Referring to FIGS. 3, 4, and 6, in some embodiments, the main unit 100 includes a hot air shield 140, which is fixed within the housing 110. The hot air shield 140 and the base 112 together define the heating chamber 120. The hot air shield 140 may be formed as a one-piece molded structure, or it may be assembled from multiple components. The inner wall of the hot air shield 140 serves as the top wall 122 of the heating chamber. To implement the first top wall 1221 and the second top wall 1222 described above, the hot air shield 140 may be formed in a recessed dome-like shape, as shown in FIG. 6. Alternatively, its cross-sectional shape may conform to the designs illustrated in FIGS. 8-10, or other appropriate configurations.

Referring to FIGS. 1-3, in some embodiments, the housing 110 includes an outer top wall 1111 with a convex shape, specifically forming the outer top wall of the upper housing 111. This curved top wall 1111 enhances the aesthetic appearance and, through a smooth transition shape, allows more efficient use of vertical space by minimizing the external volume footprint, while satisfying internal structural requirements.

Referring to FIG. 4, in some embodiments, the lowest point 1112 of the outer top wall 1111 is positioned below the first top wall 1221 of the heating chamber 120. This design places the upper region of the heating chamber 120 within the recessed dome space enclosed by the upwardly convex outer top wall 1111, thereby enabling the top of the heating chamber 120 to closely conform to the shape of the outer top wall 1111 and maximize the usable internal volume of the installation cavity.

In some embodiments, the lowest point of the outer top wall 1111 may be above, below, or approximately flush with the heating element 131 in the vertical direction. When the lowest point is below or flush with the heating element 131, the heating element 131 and the first fluid driving component 132 can be accommodated within the space defined by the convex portion of the outer top wall 1111, thereby optimizing the vertical utilization of the internal installation cavity.

In some embodiments, the horizontal distance from the outer top wall 1111 to its central axis gradually increases from top to bottom. That is, in any vertical cross-section passing through the central axis of the outer top wall 1111, the regions located at different heights have increasingly greater horizontal distances from the central axis as one moves downward, thereby forming a convex dome-shaped profile, narrower at the top and wider at the bottom.

In some embodiments, the outer surface of the outer top wall 1111 in vertical cross-section is a curve of continuous curvature. In one example, the curvature g of the arc satisfies: g ≤ 0.01, ensuring a smooth transition shape for the dome structure while still providing sufficient internal volume for the installation of components within the housing 110.

Referring to FIGS. 3 and 4, in some embodiments, the main unit 100 is provided with a cooling channel 151 extending through the structure. At least a portion of the cooling channel 151 is located above the heating chamber 120, and the control unit 140 is positioned within the cooling channel 151.

Referring to FIG. 3, the airflow direction within the cooling channel 151 is indicated by arrows J: ambient air enters from the bottom of the base 112, travels upward around the heating chamber 120, passes through the region where the control unit 140 is located, and is finally exhausted from the top of the main unit 100. In some embodiments, the cooling channel 151 may be formed as a surrounding cavity structure, enclosing at least the top of the heating chamber 120. Of course, in other embodiments, the cooling channel 151 may take various other forms, and its opening locations can be adjusted as required.

Because the control unit 140 is typically sensitive to high temperatures, conventional air fryer designs require that it be placed far from the heating chamber, resulting in larger overall dimensions of the device. In contrast, in the embodiment shown in FIG. 3, the cooling channel 151 introduces cool ambient air (relative to the hot air within the heating chamber 120) to cool down internal components, including the control unit 140.

At the same time, because the cooling channel 151 is located above the heating chamber 120, it also serves a thermal insulation function, preventing upward heat transfer. This dual cooling effect allows the control unit 140 to operate closer to the heating chamber 120, enabling a more compact design and reducing the vertical height of the device compared to conventional air fryer systems.

Referring to FIGS. 3, 4, and 6, in some embodiments, to form the cooling channel 151, the main unit 100 includes a cooling cover 152, which is positioned above the hot air shield 140 and mounted within the housing 110. The cooling channel 151 is formed between the cooling cover 152 and the hot air shield 140.

Specifically, referring to FIG. 4, the cooling cover 152 and hot air shield 140 are stacked with a spacing between them, and this gap forms at least part of the cooling channel 151.

Referring to FIGS. 3, 5, and 6, in some embodiments, to further enhance airflow within the cooling channel 151, the main unit 100 also includes a guide cover 153 and a second fluid driving component 154. The cooling cover 152 has a vent opening 1521 in its central portion. The guide cover 153 is mounted over the cooling cover 152 and communicates with the vent opening 1521, forming a guided airflow passage. The outlet of this passage connects to the exhaust outlet of the housing 110.

The second fluid driving component 154 is defined within the guide cover 153, and the control unit 140 is located within the air outlet region of the second fluid driving component 154. Under the action of the second fluid driving component 154, airflow within the cooling channel 151 is accelerated, thereby enhancing cooling efficiency.

The guide cover 153 serves to direct the airflow from the cooling channel 151 toward the control unit 140, thereby improving the thermal regulation of the control unit 140 and ensuring operational reliability.

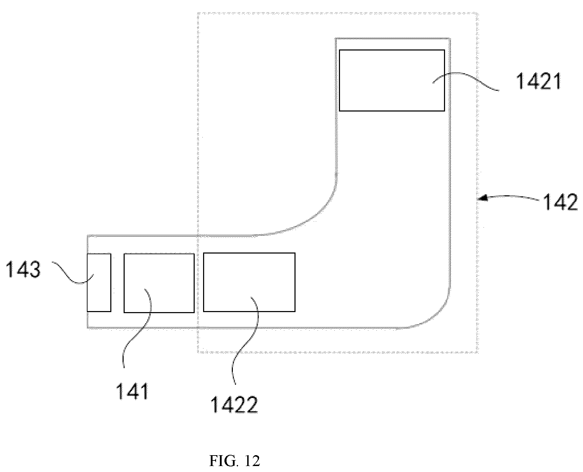

Referring to FIG. 12, in some embodiments, the control unit 140 includes a thyristor 1421 (also referred to as a silicon-controlled rectifier, or SCR). The control unit 140 is positioned near the exhaust outlet of the guide cover 153, enabling enhanced cooling of the thyristor 1421 and thereby improving its thermal dissipation efficiency. In other embodiments, the control unit 140 may also include additional control circuitry or components.

The circuit board layout of the control unit 140 may be designed in any suitable shape or configuration depending on practical requirements. Referring again to FIG. 12, in some embodiments, the circuit board is formed as a monolithic L-shaped board, having an L-shaped cutout, which allows accommodation of at least a portion of the second fluid driving component 154. This configuration helps to reduce the overall vertical size of the cooking appliance.

As shown in FIG. 12, in some embodiments, the circuit board includes a low-voltage section 141 and a high-voltage section 142, arranged to collectively form an L-shaped structure. The high-voltage section 142 comprises the thyristor 1421 and a motor drive circuit 1422. The thyristor 1421 is defined at the end portion of one side of the L-shaped structure, specifically positioned at the exhaust outlet of the guide cover 153 to ensure efficient heat removal. This design ensures that hot air, after passing through the thyristor 1421, is immediately exhausted through the outlet and does not recirculate into the low-voltage section 141, thereby preventing overheating of sensitive low-voltage components. The low-voltage section 141 and motor drive circuit 1422 are defined on the opposite side of the L-shaped structure.

Also referring to FIG. 12, in some embodiments, the circuit board further includes an interface region 143 for connecting to other electrical components of the cooking apparatus.

To optimize vertical space, in some embodiments, the second fluid driving component 154 is configured for radial air exhaust, such as by using a centrifugal fan. The control unit 140 is positioned adjacent to the perimeter of the second fluid driving component 154, so that the radially expelled cooling airflow acts directly upon the control unit 140. Additionally, to minimize the use of lateral space, the control unit 140 is preferably positioned above the heating chamber 120.

Referring to FIG. 3, in some embodiments, to simplify structure and save space, the first fluid driving component 132 and the second fluid driving component 154 are mounted on the same shaft, with the second fluid driving component 154 located above the first one. Both fluid driving components may be operated by the same motor.

To further enhance thermal insulation of the heating chamber 120, and referring to FIGS. 3, 4, and 6, in some embodiments, the main unit 100 includes a thermal insulation cover 160 defined above the hot air shield 140 within the housing 110. A thermal insulation cavity 161 is defined between the thermal insulation cover 160 and the hot air shield 140, and insulating material may be filled within this cavity 161. The insulation material may include thermal foam or other appropriate heat-resistant materials and structures. With such insulation in place, upward heat transfer from the heating chamber 120 is further reduced, allowing the control unit 140 and other components to be positioned closer vertically to the heating chamber 120. This enables a more compact vertical design, saving installation space and reducing the overall height of the cooking apparatus.

It will be understood by those skilled in the art that numerous modifications and variations to the above-described embodiments may be made without departing from the basic principles of the present invention. Therefore, the scope of the invention shall be defined by the following claims.

## Claims

1. An air fryer for cooking food, comprising:
a main unit having a heating chamber, a heating assembly and a control unit, the heating chamber has an opening, and the control unit is electrically connected to the heating assembly to control the heating assembly; and
a food container comprising a container body configured to hold food, the container body is insertable into and removable from the heating chamber through the opening;
wherein a ratio a of *a* horizontal dimension to *a* vertical dimension of a cavity of the container body satisfies: 5 ≤ *a* ≤ 6.

2. The air fryer according to claim 1, wherein a top wall of the heating chamber comprises a first top wall and a second top wall surrounding the first top wall, the second top wall being inclined downward relative to the first top wall to guide hot air to flow toward a peripheral side of the container body along the second top wall.

3. An air fryer for cooking food, comprising:
a main unit having a heating chamber, a heating assembly and a control unit, wherein the heating chamber has an opening, and the control unit is electrically connected to the heating assembly to control the heating assembly;
a food container comprising a container body configured to hold food, the container body is insertable into and removable from the heating chamber through the opening, the heating assembly is configured to generate hor air in the container body; and
wherein a top wall of the heating chamber comprises a first top wall and a second top wall surrounding the first top wall, the second top wall being inclined downward relative to the first top wall and having a lower end extending below the heating assembly to guide hot air to flow toward a peripheral side of the container body along the second top wall.

4. The air fryer according to claim 2 or 3, wherein an included angle *b* formed between the second top wall and the first top wall is within a range of: 105° ≤ *b* ≤ 150°.

5. The air fryer according to any one of clams 2 to 4, wherein. a lower end of the second top wall extends to a position vertically aligned with or horizontally located inside a peripheral side wall of the container body, when the container body is placed into the heating chamber.

6. The air fryer according to any one of clams 2 to 5, wherein when the container body is placed into the heating chamber, a portion of the food container inserted into the heating chamber is substantially horizontally flush with a lower end of the second top wall.

7. The air fryer according to any one of clams 1 to 5, wherein the heating assembly comprises a heating element and a first fluid driving member, and when the container body is placed into the heating chamber, a first region is formed between an upper end of the container body and the top wall of the heating chamber, the heating element is defined in the first region and at least partially located in an air intake area of the first fluid driving member such that airflow in capable of passing through the heating element and then enter the first fluid driving member, and the first fluid driving member outputs air radially, the airflow is exhausted radially from the first fluid driving member..

8. The air fryer according to claim 6, wherein the upper end of the container body has an opening, the heating element is defined above the opening, and the first fluid driving member is defined above the heating element; wherein, when the container body is placed into the heating chamber, a ratio c of a distance between a bottom wall of the container body and the heating element to a vertical dimension of the heating chamber satisfies: 0.5 ≤ c ≤ 0.58.

9. The air fryer according to clam 7 or 8, wherein the heating element is of a disc-shaped structure, and an outer diameter *d* of the disc-shaped structure satisfies: 190 mm ≤ *d* ≤ 220 mm.

10. The air fryer according to any one of claims 1 to 9, wherein a ratio *d* of a horizontal dimension to a vertical dimension of the heating chamber is: 2 ≤ *d* ≤ 3.

11. The air fryer according to any one of claims 1 to 10, wherein a ratio *e* of a vertical dimension of the container body to a vertical dimension of the heating chamber is: 0.4 ≤ *e* ≤ 0.5.

12. The air fryer according to any one of claims 1 to 11, wherein a ratio *f* of a vertical length of the main unit to a projected area of the main unit on a horizontal plane is: 0.0005 ≤ *f* ≤ 0.0030.

13. The air fryer according to any one of claims 1 to 12, wherein the main unit comprises a housing, and the heating chamber and the heating element of the heating assembly are defined within the housing, the housing has a convex-shaped outer top wall.

14. The air fryer according to claim 13, wherein a lowest end of the outer top wall is lower than the first top wall of the heating chamber.

15. The air fryer according to claim 13, wherein, in a top-to-bottom direction, a horizontal distance from the outer top wall to its central axis gradually increases.

16. The air fryer according to claim 13, wherein in a vertical cross-section of the outer top wall, an outer surface of the outer top wall forms a smoothly curved arc.

17. The air fryer according to claim 16, wherein a curvature *g* of the arc satisfies: *g* ≤ 0.01.

18. The air fryer according to any one of claims 13 to 17, wherein the main unit comprises a through-type cooling channel, at least part of the through-type cooling channel is defined above the heating chamber, and the control unit is defined within the cooling channel.

19. The air fryer according to claim 18, wherein the main unit comprises a hot air cover and a cooling cover, the hot air cover is fixed within the housing and together with a base of the housing forms the heating chamber; the cooling cover is defined within the housing and located above the hot air cover, and a gap between the hot air cover and the cooling cover forms at least a portion of the cooling channel.

20. The air fryer according to claim 19, wherein the main unit comprises a guide cover and a second fluid driving member, a ventilation port is provided in a middle portion of the cooling cover, the guide cover is defined over the cooling cover and communicates with the ventilation port, the second fluid driving member is defined within the guide cover, and the control unit is located in a exhaust region of the second fluid driving member.

21. The air fryer according to claim 20, wherein the second fluid driving member exhausts airflow radially, the control unit is defined aside the second fluid driving member and is located above the heating chamber.

22. The air fryer according to claim 20 or 21, wherein the main unit comprises a thermal insulation cover defined within the housing and above the hot air cover, with thermal insulation material provided between the thermal insulation cover and the hot air cover.

23. The air fryer according to any one of claims 1 to 22, wherein, in the vertical direction, using a top wall of the heating chamber as a boundary, a ratio h of a vertical size of the portion of the main unit above the top wall to a vertical size of the heating chamber is: *h* ≥ 0.48.

24. The air fryer according to any one of claims 1 to 23, wherein, in the vertical direction, using a top end of the opening as a boundary, a ratio *i* of a vertical dimension of a portion of the main unit located above the top end to a vertical dimension of a portion located below the top end is: *i* > 1.

25. A cooking apparatus for food preparation, werein comprising:
a main unit having a heating chamber, a heating component and a control unit, the heating chamber comprises an opening, and the control unit is electrically connected to the heating component for controlling the heating component;
a food container having a container body configured to hold food, wherein the container body is insertable into and removable from the heating chamber via the opening, and the heating component is configured to generate hot air inside the container body; and
wherein a ratio *a* of the horizontal dimension to the vertical dimension of the container cavity is: 5 ≤ *a* ≤ 6.

26. A cooking apparatus for food preparation, comprising:
a main unit having a heating chamber, a heating component and a control unit, the heating chamber includes an opening, and the control unit is electrically connected to the heating component for controlling the heating component;
a food container having a container body configured to hold food, wherein the container body is insertable into and removable from the heating chamber via the opening, and the heating component is configured to generate hot air inside the container body; and
wherein the top wall of the heating chamber comprises a first top wall and a second top wall defined around the first top wall, the second top wall being inclined downward relative to the first top wall, and a lower end of the second top wall extends below the heating component to guide hot air to flow along the second top wall toward the peripheral side of the container body.

27. The cooking apparatus according to claim 26, wherein an angle *b* formed between the second top wall and the first top wall satisfies: 105° ≤ *b* ≤ 150°.

28. The cooking apparatus according to any one of claims 25 to 27, wherein the main unit comprises a through cooling channel, at least a portion of which is located above the heating chamber, and the control unit is defined within the cooling channel.

29. The cooking apparatus according to claim 28, wherein the main unit comprises a hot air cover and a cooling cover, the hot air cover being fixedly defined in the housing and cooperating with the base of the housing to define the heating chamber;
the cooling cover is defined inside the housing and located above the hot air cover, with a gap formed between the hot air cover and the cooling cover, the gap forming at least a portion of the cooling channel;
the main unit further comprises a guide cover and a second fluid driving component, a central portion of the cooling cover has a vent opening, the guide cover is fastened over the cooling cover and communicates with the vent opening, and the second fluid driving component is defined within the guide cover, the control unit being located in the air outlet region of the second fluid driving component; and
wherein the second fluid driving component exhausts airflow radially, and the control unit is defined around the second fluid driving component and located above the heating chamber.
